(19)

Europäisches
Patentamt
European
Patent Office
Office européen
des brevets

(11)  **EP 2 536 237 A1**

(12) **EUROPEAN PATENT APPLICATION**
published in accordance with Art. 153(4) EPC

(43) Date of publication:
**19.12.2012 Bulletin 2012/51**

(21) Application number: **11742214.7**

(22) Date of filing: **08.02.2011**

(51) Int Cl.:
**H04W 72/08** (2009.01)

(86) International application number:
**PCT/JP2011/052605**

(87) International publication number:
**WO 2011/099470 (18.08.2011 Gazette 2011/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.02.2010 JP 2010027766**

(71) Applicant: **NTT DOCOMO, INC.**
**Chiyoda-ku**
**Tokyo 100-6150 (JP)**

(72) Inventors:
• **MATSUTANI, Hideyuki**
**Tokyo 100-6150 (JP)**
• **HANAKI, Akihito**
**Tokyo 100-6150 (JP)**
• **KAWABE, Yasuhiro**
**Tokyo 100-6150 (JP)**
• **NAKAMURA, Yuichiro**
**Tokyo 100-6150 (JP)**

(74) Representative: **Maury, Richard Philip et al**
**Marks & Clerk LLP**
**90 Long Acre**
**London**
**WC2E 9RA (GB)**

(54) **WIRELESS CONTROL DEVICE AND WIRELESS COMMUNICATION METHOD**

(57)    A radio network controller for a wireless communication system, in which a dedicated channel and an enhanced dedicated channel are switched and assigned for an uplink for each call, includes a throughput estimation unit that estimates a throughput, wherein the throughput is expected when the enhanced dedicated channel is assigned to a call to be transmitted by a mobile station to which the dedicated channel has been assigned and/or to a call to be transmitted by a mobile station that initiates a communication; a packet access scheme selection unit that selects the enhanced dedicated channel, when the throughput estimated by the throughput estimation unit is greater than or equal to a predetermined threshold value; and a packet access scheme setting unit that sets the enhanced dedicated channel, when the packet access scheme selection unit selects the enhanced dedicated channel.

FIG.3

## EP 2 536 237 A1

**Description**

<u>TECHNICAL FIELD</u>

The present invention relates to a wireless communication system.

<u>BACKGROUND ART</u>

Recently, the wideband-code division multiple access (W-CDMA) that has been specified by the 3rd generation partnership project (3GPP) and that utilizes the code division multiple access (CDMA) has been introduced for wireless communication systems (cf., Non-patent document 1). Further, for the W-CDMA, the high speed downlink packet access (HSDPA) that enhances the transmission speed for the downlink has been introduced (cf., Non-patent document 2). Furthermore, for the W-CDMA, the enhanced uplink (EUL) that enhances the transmission speed for the uplink has been introduced (cf., Non-patent document 3).

For the W-CDMA, as a packet access scheme (uplink packet access scheme) for a direction from a mobile station (UE: User Equipment) to a radio base station (Node B), a scheme that utilizes the dedicated channels (DCH) (hereinafter, referred to as the "DCH scheme") has been utilized. For the W-CDMA where the EUL has been implemented, as a packet access scheme, sometimes a scheme that utilizes enhanced dedicated channels (E-DCH) (hereinafter, referred to as the "E-DCH scheme") may be utilized, in addition to the DCH scheme. In the E-DCH scheme, the maximum value of the data size that can be transmitted from the mobile station per unit time is set to be greater than that of the DCH scheme. Since the maximum value of the data size that can be transmitted from the mobile station per unit time is greater then that of the DCH scheme, for the E-DCH scheme, the maximum transmission rate is greater than that of the DCH scheme.

In a wireless communication system where the EUL has been implemented, the two uplink packet access schemes, which are the DCH scheme and the E-DCH scheme, are concurrently used as packet access schemes for the uplink direction.

For the DCH scheme, the hardware resources of the radio base station are statically reserved depending on the maximum transmission rate of each packet call. Since the hardware resources are statically reserved, for an intermittent data transmission, a case where a hardware resource that is reserved but that is not utilized may occur. For example, when the hardware resources are reserved for a packet call that has the greater maximum transmission rate, such as in the E-DCH scheme, than that of the DCH scheme, the efficiency of the utilization of the hardware resources are further lowered.

Therefore, in the E-DCH scheme, the hardware resources, which are to be statically reserved, are periodically reassigned depending on the actual transmission rate of the corresponding packet call. By periodically reassigning the hardware resources, the efficiency of the utilization of the hardware resources can be improved compared to that of the DCH scheme. The control of the actual transmission rate of each of the packet calls is also referred to as scheduling. The scheduling is realized by controlling, for each mobile station, the power that can be utilized for transmitting uplink packet data (permissible transmission power) by the radio base station for every constant period. Each of the mobile stations transmits the uplink packet data in the transmission data size that can be transmitted, within the permissible transmission power that is indicated by the radio base station. The radio base station controls the permissible transmission power for each of the mobile stations communicating in the E-DCH scheme, so that the received power from all the mobile stations within one cell is maintained to be constant.

In the wireless communication system in which the DCH scheme and the E-DCH scheme are concurrently utilized as the uplink packet access schemes, spread codes that can be utilized for the E-DCH scheme are assigned. In other words, in a cell in which the spread codes that can be utilized for the E-DCH scheme are assigned, both the DCH scheme and the E-DCH scheme can be utilized. By using the E-DCH scheme, the maximum transmission rate for the packet calls can be improved.

<u>RELATED ART DOCUMENT</u>

[NON-PATENT DOCUMENT]

Non-patent document 1: 3GPP TS21.101 V8.2.2 (2009-12)
Non-patent document 2: 3GPP TS25.308 V9.1.0 (2009-09)
Non-patent document 3: 3GPP TS25.309 V6.6.0 (2006-03)

## SUMMARY OF THE INVENTION

## PROBLEM TO BE SOLVED BY THE INVENTION

When the uplink packet access scheme for a call being communicated in the DCH scheme is switched to the E-DCH scheme, it is possible that throughput of the uplink of the call becomes lower than throughput of the uplink in the DCH scheme, though the scheme has been switched to the E-DCH scheme. Further, when the E-DCH scheme is utilized as the packet access scheme of the uplink of a call for which a communication is to be started, it is possible that throughput of the uplink of the call becomes lower than that of the DCH scheme, though the E-DCH scheme has been utilized.

It is possible to consider, as the causes that lower the throughput of the uplink of the call by the E-DCH scheme below that of the case where the DCH scheme is utilized, that the interference power in the uplink and the transmission power that can be set by the mobile station are the bottlenecks.

The present invention has been accomplished in view of the above described point at issue. The objective of the invention is to provide a radio network controller (RNC) and a wireless communication method where a packet access scheme can be selected based on a throughput of an uplink in a code division multiple access wireless communication system, in which plural packet access schemes are concurrently utilized for the uplink.

## MEANS FOR SOLVING THE PROBLEM

The radio network controller is
a radio network controller for a wireless communication system in which a dedicated channel and an enhanced dedicated channel may be switched and assigned for an uplink for each call, the radio network controller including
a throughput estimation unit that estimates a throughput, wherein the throughput is expected when the enhanced dedicated channel is assigned to a call to be transmitted by a mobile station to which the dedicated channel has been assigned and/or to a call to be transmitted by a mobile station that initiates a communication;
a packet access scheme selection unit that selects the enhanced dedicated channel, when the throughput estimated by the throughput estimation unit is greater than or equal to a predetermined threshold value; and
a packet access scheme setting unit that sets the enhanced dedicated channel, when the packet access scheme selection unit selects the enhanced dedicated channel.

The wireless communication method is
a wireless communication method for a radio network controller in a wireless communication system in which a dedicated channel and an enhanced dedicated channel may be switched and assigned for an uplink for each call, the wireless communication method including
a throughput estimation step of estimating a throughput, wherein the throughput is expected when the enhanced dedicated channel is assigned to a call to be transmitted by a mobile station to which the dedicated channel has been assigned and/or a call to be transmitted by a mobile station that initiates a communication;
a packet access scheme selection step that selects the enhanced dedicated channel, when the throughput estimated by the throughput estimation step is greater than or equal to a predetermined threshold value, and that selects the dedicated channel, when the throughput estimated by the throughput estimation step is less than the predetermined threshold value; and
a packet access scheme setting step of setting the enhanced dedicated channel, when the packet access scheme selection step selects the enhanced dedicated channel.

## EFFECT OF THE PRESENT INVENTION

According to the disclosed radio network controller and the wireless communication method, a packet access scheme can be selected based on a throughput of an uplink in a code division multiple access wireless communication system, in which plural packet access schemes are concurrently utilized for the uplink.

## BRIEF DESCRIPTION OF THE DRAWINGS

FIG. 1 is an explanatory diagram showing an example of a wireless communication system according to an embodiment;
FIG. 2 is a functional block diagram showing an example of a radio network controller according to the embodiment;
FIG. 3 is a functional block diagram showing functions of the radio network controller according to the embodiment;
FIG. 4 is a flowchart showing operations of the wireless communication system according to the embodiment;

FIG. 5 is a functional block diagram showing an example of a radio base station according to the embodiment;

FIG. 6 is a functional block diagram showing an example of the radio network controller according to the embodiment;

FIG. 7 is a flowchart showing operations of the wireless communication system according to the embodiment;

FIG. 8 is a functional block diagram showing an example of a switching center apparatus according to the embodiment;

FIG. 9 is a functional block diagram showing an example of the radio network controller according to the embodiment; and

FIG. 10 is a flowchart showing operations of the wireless communication system according to the embodiment.

## EMBODIMENTS FOR CARRYING OUT THE INVENTION

An aspect for implementing the present invention is explained based on embodiments below, while referring to the figures. Here, in all the figures for illustrating the embodiments, for elements that have the same function, the same reference code is used, and overlapped explanations are omitted.

<First embodiment>

<Wireless communication system>

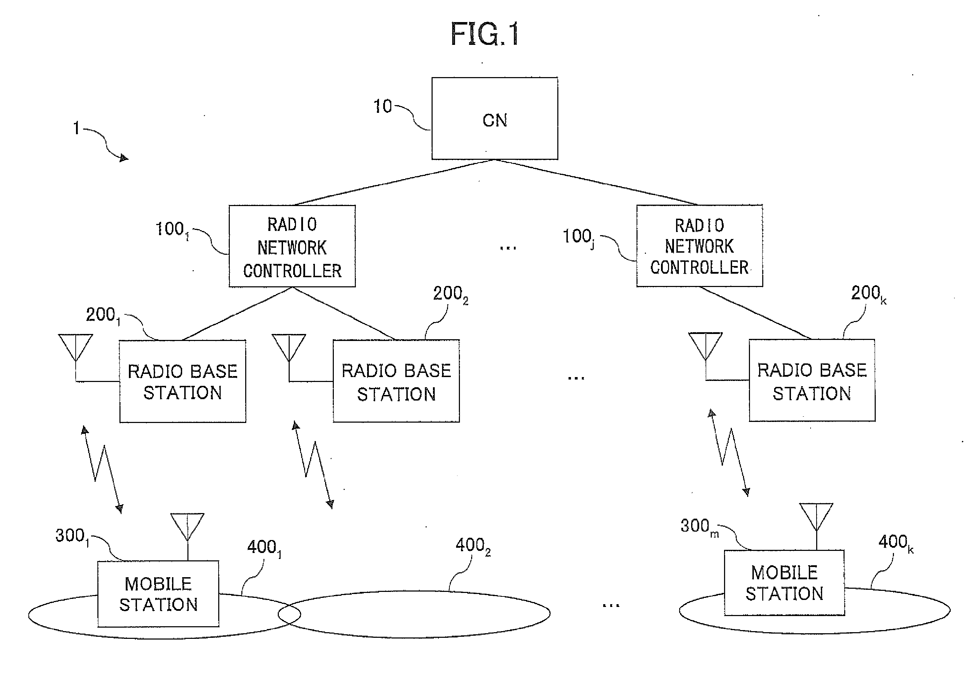

FIG. 1 shows an example of a wireless communication system according to the embodiment.

The wireless communication system includes radio network controllers (RNCs) $100_1$-$100_j$ (j is an integer such that j>0), radio base stations (Node Bs) $200_1$-$200_k$ (k is an integer such that k>0), and mobile stations (UE: User Equipment) $300_1$-$300_m$ (m is an integer such that m>0). The radio network controllers $100_1$-$100_j$ are connected to a core network (CN: Core Network) 10. The core network may include a switching center apparatus 20 (not shown). The radio network controllers $100_1$-$100_j$ execute the controls regarding wireless communications that are performed between the base station apparatuses $200_1$-$200_k$ and the mobile stations $300_1$-$300_m$.

In FIG. 1, sectors that are covered by the radio base stations $200_1$-$200_k$ are indicated as sectors $400_1$-$400_k$, respectively. In each of the sectors $400_1$-$400_k$, a finite number of cells having carrier frequencies being different with each other are overlaid. In FIG. 1, an example is shown in which one base station apparatus covers one sector. The configuration may be such that one base station apparatus covers plural sectors.

Since the radio network controllers $100_1$-$100_j$ have similar functions, hereinafter they are denoted as the radio network controller (RNC) 100, provided that it is not necessary to distinguish them. The radio base stations $200_1$-$200_k$ may include the radio base stations that conform to the E-DCH scheme and the radio base stations that do not conform to the E-DCH scheme. For example, the radio base stations that conform to the E-DCH scheme and the radio base stations that do not conform to the E-DCH scheme may coexist. In the embodiment, the wireless communication devices that conform to the E-DCH scheme are mainly explained. Hereinafter, the radio base station (Node B) that conforms to the E-DCH scheme is denoted as the wireless base station device (Node B) 200. The mobile stations $300_1$-$300_m$ may include the mobile stations that conform to the E-DCH scheme and the mobile stations that do not conform to the E-DCH scheme. For example, the mobile stations that conform to the E-DCH scheme and the mobile stations that do not conform to the E-DCH scheme may coexist. In the embodiment, the mobile stations that conform to the E-DCH scheme are mainly explained. Hereinafter, the mobile station (UE: User Equipment) that conforms to the E-DCH scheme is denoted as the mobile station (UE: User Equipment) 300.

The W-CDMA is implemented for the wireless communication system. Communication signals are transmitted and received between the radio base stations $200_1$-$200_k$ and the mobile stations $300_1$-$300_m$ by using any of the carrier frequencies. Communication signals having the same carrier frequency are code division multiple accessed (CDMA) by using a finite number of spread codes. Further, for uplinks of the wireless communication system, the enhanced uplink (EUL: Enhanced Uplink) is implemented. The enhanced uplink may also be referred to as a high speed uplink packet access (HSUPA: High Speed Uplink Packet Access). Here, the uplink is a direction from the mobile station 300 to the radio base station 200. For the packet access scheme of the uplink of the wireless communication system, the DCH scheme that utilizes dedicated channels (DCH: Dedicated Channel) and the E-DCH scheme that utilizes enhanced dedicated channels (E-DCH: Enhanced Dedicated Channel) are concurrently utilized.

In the DCH scheme, the transmission rate and the transmission format can be switched at high speed in units of one radio frame (10 ms). In addition, high-speed power control is performed on a slot-by-slot basis (about 0.67 ms). The DCH is individually assigned to each mobile station. The physical channel of the DCH is a dedicated physical channel (DPCH: Dedicated Physical Channel). The dedicated physical channel includes a dedicated physical data channel (DPDCH: Dedicated Physical Data Channel) and a dedicated physical control channel (DPCCH: Dedicated Physical Control Channel).

The E-DCH scheme utilizes uplink channels that realize an enhanced uplink function. The transmission format can be varied in units of one time slot (TTI = 10 ms or 2 ms), depending on an amount of data to be transmitted and a limit of the transmission power that is allowed for each user by the base station apparatus. The physical channel of the E-DCH is an enhanced dedicated physical channel (E-DPCH: Enhanced Dedicated Physical Channel). The enhanced dedicated physical channel includes an enhanced dedicated physical data channel (E-DPDCH: Enhanced Dedicated Physical Data Channel) and an enhanced dedicated physical control channel (E-DPCCH: Enhanced Dedicated Physical Control Channel).

The wireless communication system determines whether the transport channel, on which a call being in progress in the DCH scheme is mapped, is switched to the E-DCH. In other words, it is selected whether the uplink call being in progress in the DCH scheme is continuously transmitted in the DCH scheme or it is switched in the E-DCH scheme and transmitted. Further, when a communication is started, the wireless communication system selects whether the transport channel is to be transmitted in the DCH scheme or in the E-DCH scheme. Here, a call, which is to be a subject of the communication, is mapped onto the transport channel.

In the wireless communication system, during the selection whether the transmission is continuously performed in the DCH scheme or the transmission is performed in the E-DCH scheme, the expected uplink throughput is estimated while assuming that the transmission is performed in the E-DCH. In the wireless communication system, it is determined whether the uplink throughput is greater than or equal to a predetermined threshold value. When the estimated value of the uplink throughput is greater than or equal to the predetermined threshold value, the E-DCH scheme is selected as the packet access scheme for the uplink. On the other hand, when the estimated value of the throughput is less than the predetermined threshold value, the DCH scheme is selected as the packet access scheme for the uplink. It is preferable that the threshold value exceed the throughput that is obtained when the transmission is performed in the DCH scheme. For example, as the threshold value, 384 kbps may be applied.

By selecting the E-DCH scheme, when the estimated value of the uplink throughput, which is expected by assuming that the transmission is performed in the E-DCH scheme, is greater than or equal to the threshold value, and by selecting the DCH scheme, when the uplink throughput is less than the threshold value, the transmission is performed in the E-DCH scheme, if the throughput is greater than or equal to the threshold value, in other words, if the throughput is greater than the throughput that is obtained when the transmission is performed in the DCH scheme. Therefore, it is not possible that the throughput becomes lower than that of the DCH scheme, though the transmission has been performed in the E-DCH scheme.

<Radio network controller>

In the wireless communication system, a process of selecting whether the transmission is performed in the DCH scheme or the transmission is performed in the E-DCH scheme may be performed by the radio network controller 100, the radio base station 200, or the core network side. In the embodiment, as an example, a case where the process is performed by the radio network controller 100 is explained. A case where the process is performed by the radio base station 200 and a case where the process is performed by the core network side will be explained later.

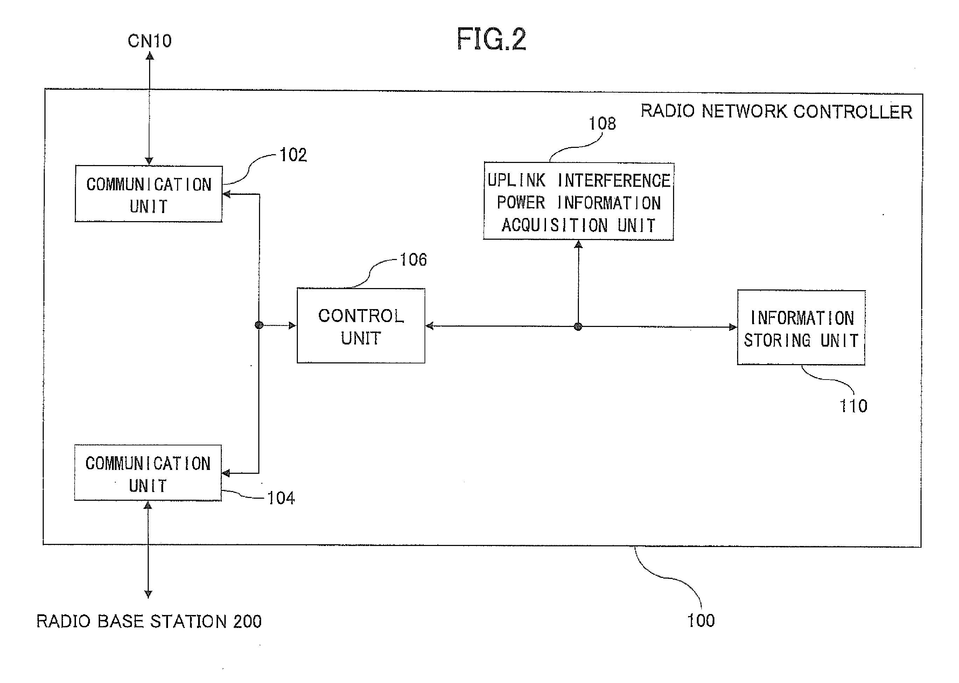

FIG. 2 shows the radio network controller 100 of the wireless communication system. In FIG. 2, portions that are related to the embodiment are mainly explained. Therefore, it should be noted that the radio network controller 100 includes blocks that are required for realizing functions as a radio network controller but that are not shown in the figure or whose explanations are omitted. The blocks whose explanations are omitted include, for example, a power supply unit.

The radio network controller 100 includes a communication unit 102. The communication unit 102 is connected to the core network 10. The connection may be a wired connection or a wireless connection. For the case of wired connection, the connection may be an optical connection. The communication unit 102 performs communications between the radio network controller 100 and the core network 10. In other words, the communication unit 102 provides a communication interface for performing communications through the core network 10.

The radio network controller 100 includes a communication unit 104. The communication unit 104 is connected to the radio base station 200 that is to be controlled by the radio network controller 100. The connection may be a wired connection or a wireless connection. For the case of the wired connection, the connection may be an optical connection. The communication unit 104 performs communications between the radio network controller 100 and the radio base station 200. In other words, the communication unit 104 provides a communication interface for performing communications with the radio base station 200.

The radio network controller 100 includes a control unit 106. The control unit 106 is connected to the communication units 102 and 104. The control unit 106 performs control regarding wireless communications that are performed between the radio base station 200 and the mobile station 300. The communication unit 104 inputs interference power of an uplink to the control unit 106. The interference power of the uplink may be that measured by the radio base station 200, which is to be controlled by the radio network controller 100. The control unit 106 inputs the interference power of the uplink, which has been input by the communication unit 104, to an uplink interference power acquisition unit 108. Further, the control unit 106 determines whether a mobile station communicating in the DCH scheme, in other words, the mobile station to which the DCH scheme has been set, is caused to transmit a call (which is to be transmitted) in the DCH scheme or in the E-DCH scheme. Further, the control unit 106 determines whether a mobile station, which initiates a communication, is caused to transmit a call (which is to be transmitted) in the DCH scheme or in the E-DCH scheme. Hereinafter, the call to be transmitted is called the "uplink packet access scheme selection target call." The control unit 106 causes a mobile station that is to transmit the "uplink packet access scheme selection target call" (hereinafter, it is called the "uplink packet access scheme selection target mobile station") to report a radio wave propagation loss between a radio base station that covers a cell and the uplink packet access scheme selection target mobile station, so as to determine whether the control unit 106 causes the uplink packet access scheme selection target mobile station to transmit in the DCH scheme or in the E-DCH scheme. Here, the cell is a candidate in which the uplink packet access scheme selection target call is transmitted in the E-DCH scheme (hereinafter, the cell is called the "E-DCH communication candidate cell"). The radio wave propagation loss may also be called a "path loss."

Further, the control unit 106 receives the report on the radio wave propagation loss from the uplink packet access scheme selection target mobile station. The control unit 106 calculates uplink throughput (uplink E-Tput) that is expected when the uplink packet access scheme selection target mobile station performs a communication by the E-DCH scheme in the E-DCH communication candidate cell, based on the radio wave propagation loss, the uplink interference power of the E-DCH communication candidate cell that is obtained by the uplink interference power acquisition unit 108, and the maximum transmission power that can be transmitted by the uplink packet access scheme selection target mobile station. Further, the control unit 106 selects the E-DCH scheme as the uplink packet access scheme, when the estimated uplink E-Tput is greater than or equal to the threshold value T. Here, the threshold value T has been obtained by an information storing unit 110.

<Function of control unit 106>

The function is explained in detail using functional blocks.

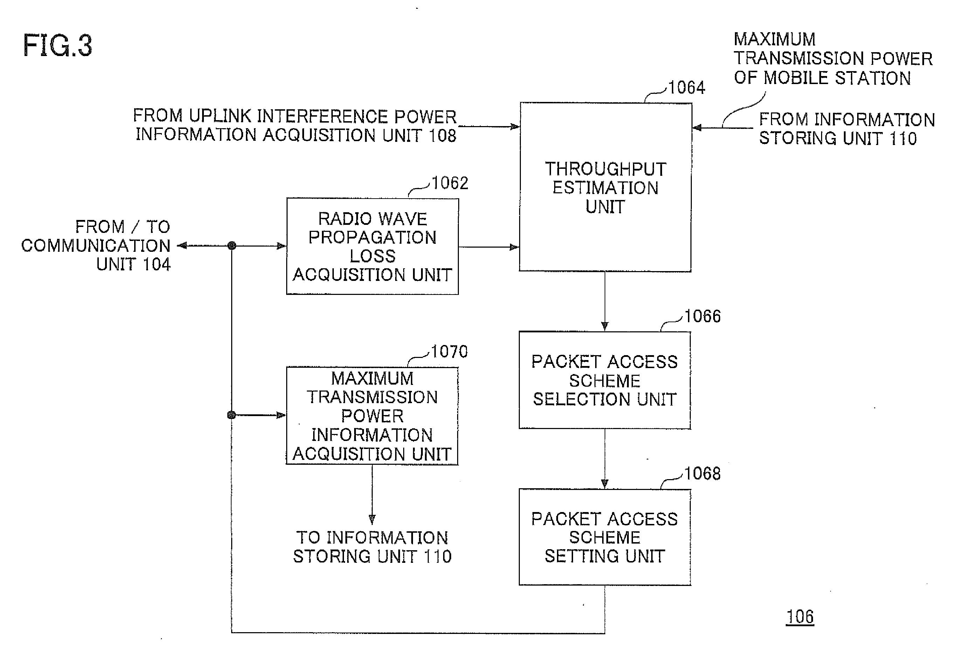

FIG. 3 shows the functional blocks of the control unit 106.

The control unit 106 includes a radio wave propagation loss acquisition unit 1062. The radio wave propagation loss acquisition unit 1062 is connected to the communication unit 104. The radio wave propagation loss acquisition unit 1062 obtains the radio wave propagation loss that has been measured by the mobile stations 300. The radio wave propagation loss is obtained by way of the radio base station 200. The radio wave propagation loss acquisition unit 1062 inputs the radio wave propagation loss to a throughput estimation unit 1064.

The control unit 106 includes the throughput estimation unit 1064. The throughput estimation unit 1064 is connected to the uplink interference power acquisition unit 108 and the radio wave propagation loss acquisition unit 1062. The uplink interference power acquisition unit 108 inputs the uplink interference power to the throughput estimation unit 1064, the radio wave propagation loss acquisition unit 1062 inputs the radio wave propagation loss to the throughput estimation unit 1064, and the information storing unit 110 inputs the maximum transmission power of the mobile stations (the uplink packet access scheme selection target mobile stations) to the throughput estimation unit 1064. The throughput estimation unit 1064 estimates the maximum uplink Ec/NO, based on the uplink interference power, the propagation loss, and the maximum transmission power of the mobile stations. Here, the Ec/NO is the signal power to noise power density ratio per chip. For example, the throughput estimation unit 1064 calculates the "estimated maximum uplink Ec/NO [dB]" by the formula (1).

$$\text{The estimated maximum uplink Ec/NO[dB]} = A[dBm] - B[dB] - C[dBm] \quad (1).$$

In the formula (1), A[dBm] indicates the maximum transmission power that can be transmitted by the mobile stations 300 in the E-DCH communication candidate cell. B[dB] indicates the radio wave propagation loss between the mobile stations 300 and the wireless base station device that covers the E-DCH communication candidate cell. C[dBm] indicates the uplink interference power other than a portion contributed by the mobile stations in the E-DCH communication candidate cell.

The throughput estimation unit 1064 estimates the uplink throughput based on the estimated maximum uplink Ec/NO [dB]. For example, the throughput estimation unit 1064 may include a correspondence table that associates the maximum uplink Ec/NO [dB] with the uplink throughput. When the throughput estimation unit 1064 estimates the maximum uplink Ec/NO [dB], the throughput estimation unit 1064 obtains the uplink throughput that corresponds to the maximum uplink Ec/NO [dB]. The correspondence table may be derived in advance, based on the actual measurement values. For example, the correspondence table may be derived in advance based on a value obtained by averaging the actual measurement values. The throughput estimation unit 1064 inputs the estimated value of the uplink throughput to a packet access scheme selection unit 1066.

The control unit 106 includes the packet access scheme selection unit 1066. The packet access scheme selection unit 1066 is connected to the throughput estimation unit 1064. The packet access scheme selection unit 1066 selects a packet access scheme based on the estimated value of the uplink throughput, which has been input from the throughput estimation unit 1064. For example, when the estimated value of the uplink throughput is greater than or equal to a predetermined threshold vale, the packet access scheme selection unit 1066 selects the E-DCH scheme. Further, when the estimated value of the uplink throughput is less than the predetermined threshold value, the packet access scheme selection unit 1066 selects the DCH scheme. The packet access scheme selection unit 1066 inputs the selected packet access scheme to a packet access scheme setting unit 1068.

The control unit 106 includes the packet access scheme setting unit 1068. The packet access scheme setting unit 1068 is connected to the packet access scheme selection unit 1066. The packet access scheme setting unit 1068 sets the packet access scheme, which has been input from the packet access scheme selection unit 1066. For example, when the E-DCH scheme is selected for the mobile station 300 communicating in the DCH scheme, the E-DCH is set for the mobile station 300. Further, for example, when the DCH scheme is selected for the mobile station 300 communicating in the DCH scheme, the uplink packet access scheme that has been set for the mobile station 300 remains unchanged. This is because the DCH scheme has already been set. Further, for example, when the E-DCH scheme is selected for the mobile station 300, which initiates a communication, the E-DCH is set for the mobile station 300. Further, for example, when the DCH scheme is selected for the mobile station 300, which initiates a communication, the DCH scheme is set for the mobile station 300.

The packet access scheme setting unit 1068 transmits a signal indicating the uplink packet access scheme that has been set for the mobile station 300 (hereinafter, it is called the "uplink packet access scheme setting signal") to the mobile station 300. By the uplink packet access scheme setting signal, it is possible to report to the mobile station 300 communicating in the DCH scheme whether the mobile station 300 is to perform a transmission in the DCH scheme or in the E-DCH scheme. In addition, by the uplink packet access scheme setting signal, it is possible to report to the mobile station 300, which initiates a communication, whether the mobile station 300 is to perform a transmission in the DCH or in the E-DCH. The uplink packet access scheme setting signal is transmitted to the mobile station 300 through the radio base station 200.

The control unit 106 includes a maximum transmission power information acquisition unit 1070. The maximum transmission power information acquisition unit 1070 is connected to the communication unit 104. The maximum transmission power information acquisition unit 1070 obtains information regarding the maximum transmission power that can be transmitted from the uplink packet access scheme selection target mobile stations in the serving area of the E-DCH scheme communication candidate cell. The maximum transmission power acquisition unit 1070 stores the information regarding the maximum transmission power in the information storing unit 110.

The radio network controller 100 includes the uplink interference power acquisition unit 108. The uplink interference power acquisition unit 108 is connected to the control unit 106. The uplink interference power acquisition unit 108 obtains the interference power of the uplink that is to be obtained by the radio network controller 100. The interference power of the uplink may be that of obtained by the radio base station 200 to be controlled by the radio network controller 100. The uplink interference power acquisition unit 108 obtains the interference power of the uplink in each cell included in the sectors $400_1$ - $400_k$. For example, the uplink interference power acquisition unit 108 obtains the total received power of the spread spectrum signals by receiving, by the radio base stations $200_1$ - $200_k$, calls transmitted by the DCH scheme or the E-DCH scheme in the corresponding sectors covered by the radio base stations $200_1$ - $200_k$. The total received power may be obtained for each cell. Further, the total received power may be periodically obtained. The uplink interference power acquisition unit 108 inputs the uplink interference power to the control unit 106.

The radio network controller 100 includes the information storing unit 110. The information storing unit 110 is connected to the control unit 106. The information storing unit 100 stores the information about the maximum transmission power that can be transmitted by mobile stations in the serving sector covered by the radio base station 200, which is to be controlled by the radio network controller 100. For example, the information storing unit 110 may store the information about the maximum transmission power that can be transmitted from the mobile stations in the serving sector covered by the radio base station 200 which can receive uplink signals transmitted by the E-DCH scheme, among the base station apparatuses 200, which are to be controlled by the radio network controller 100. The information storing unit 110 inputs the maximum transmission power of the uplink packet access scheme selection target mobile stations to the control unit 106, in response to a request from the control unit 106. Further, the information storing unit 110 stores a determination threshold value T for determining whether the E-DCH scheme is to be selected based on the uplink throughput estimated by the radio network controller 100.

<Uplink packet access scheme selection method>

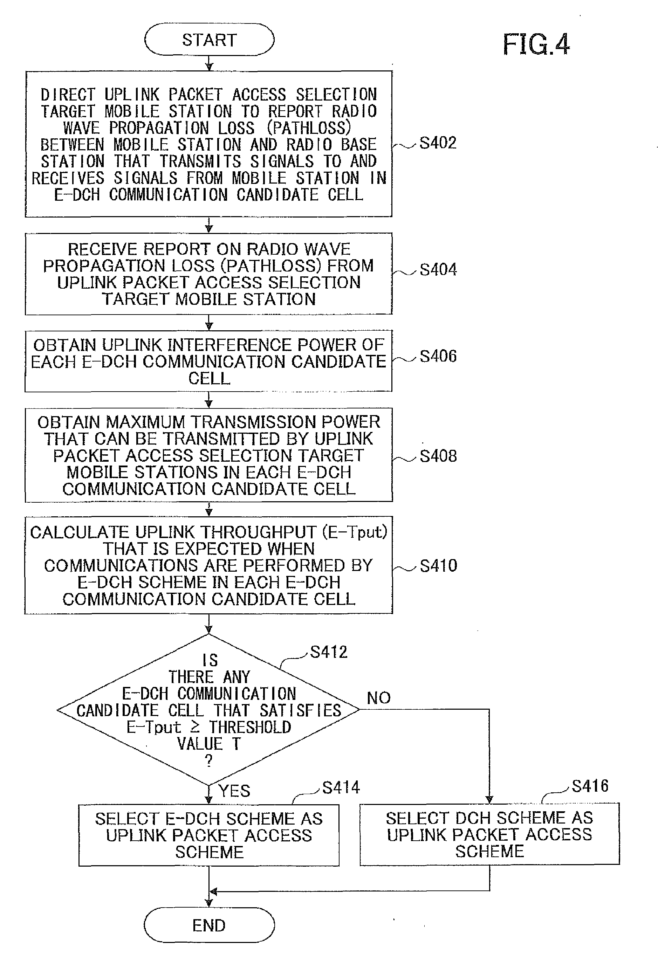

FIG. 4 shows an uplink packet access scheme selection method. In the embodiment, the radio network controller 100 selects whether the DCH scheme is to be utilized or the E-DCH scheme is to be utilized, as the uplink packet access scheme for a call to be transmitted by a mobile station communicating in the DCH scheme and/or a mobile station that initiates a communication (the uplink packet access scheme selection target call).

The radio network controller 100 sets the cells that conform to the E-DCH scheme as the E-DCH communication candidate cells, among the cells that are overlaid on the serving sector where the mobile station, for which an uplink packet access scheme is to be selected, is located. The radio network controller 100 directs the uplink packet access scheme selection target mobile station to report the radio wave propagation loss between the mobile station located in the serving E-DCH communication candidate cell and a base station apparatus that is to send signals to and receive signals from the mobile station (step S402). As a result of the direction, the uplink packet access scheme selection target mobile station reports the radio wave propagation loss between the mobile station and the radio base station that covers the E-DCH communication candidate cell.

For example, when data to be transmitted by the uplink exceeds a predetermined threshold value, the mobile station 300 transmits a signal that requests to increase the transmission rate of the uplink (hereinafter, it is called the "transmission rate increment signal"). When the radio network controller 100 receives the transmission rate increment signal from the mobile station 300, the radio network controller 100 sets the mobile station that has transmitted the transmission rate increment signal to be the uplink packet access scheme selection target mobile device. Further, the radio wave propagation loss acquisition unit 1062 directs the uplink packet access scheme selection target mobile device to report the radio wave propagation loss between the mobile station located in the serving cell that conforms to the E-DCH scheme and the wireless base station device. The radio wave propagation loss may also be called a "path loss."

The radio network controller 100 receives a report on the radio wave propagation loss from the uplink packet access scheme selection target mobile station (step S404). For example, the radio wave propagation loss acquisition unit 1062 receives the report on the radio wave propagation loss transmitted from the uplink packet access scheme selection target mobile station.

The radio network controller 100 obtains uplink interference power of each E-DCH communication candidate cell (step S406). For example, the uplink interference power acquisition unit 108 obtains the uplink interference power that has been obtained by the wireless base station device 200, which is to be controlled by the radio network controller 100.

The radio network controller 100 obtains the maximum transmission power that can be transmitted from the uplink packet access scheme selection target mobile station in the cell that conforms to the E-DCH scheme (step S408). For example, the maximum transmission power information acquisition unit 1070 obtains the information regarding the maximum transmission power from the uplink packet access scheme selection target mobile station located in the serving cell that conforms to the E-DCH scheme. Here, the uplink packet access scheme selection target mobile station can transmit the maximum transmission power. The maximum transmission power information acquisition unit 1070 stores the information regarding the maximum transmission power in the information storing unit 110.

The radio network controller 100 estimates the expected uplink throughput for the case where the uplink packet access scheme selection target mobile station performs a communication in the E-DCH scheme in each of the cells that conforms to the E-DCH scheme (step S410). For example, the uplink interference power acquisition unit 108 inputs the uplink interference power to the throughput estimation unit 1064, the radio wave propagation loss acquisition unit 1062 inputs the radio wave propagation loss to the throughput estimation unit 1064, and the information storing unit 1070 inputs the information regarding the maximum transmission power to the throughput estimation unit 1064. The throughput estimation unit 1064 estimates the uplink throughput (E-Tput) based on the information that has been input. The uplink throughput is input to the packet access scheme selection unit 1066.

The radio network controller 100 determines whether there exists a cell, among the E-DCH communication candidate cells, where the uplink throughput (E-Tput) estimated at step S410 is greater than or equal to the threshold value T. For example, the packet access scheme selection unit 1066 determines whether there exists a cell, among the E-DCH communication candidate cells, where the uplink throughput (E-Tput) that has been input from the throughput estimation unit 1064 is greater than or equal to the threshold value T.

When there exists a cell where the uplink throughput (E-Tput) is greater than or equal to T (step S412: YES), the radio network controller 100 selects the E-DCH scheme as the uplink access scheme (step S414). For example, when there is a cell where the uplink throughput is greater than or equal to the threshold value T, the packet access scheme selection unit 1066 selects the E-DCH scheme as the uplink access scheme for the uplink packet access scheme selection target mobile station, which is located in the serving cell.

On the other hand, when there are no cells where the uplink throughput is greater than or equal to the threshold value T (step S412: NO), the radio network controller 100 selects the DCH scheme as the uplink access scheme (step S416). For example, when there are no cells where the uplink throughput is greater than or equal to the threshold value T, the packet access scheme selection unit 1066 selects the DCH scheme as the uplink access scheme for the uplink packet access scheme selection target mobile station, which is located in the serving cell.

After the E-DCH scheme or the DCH scheme has been selected as the uplink access scheme, the radio network controller 100 sets the selected uplink access scheme. For example, the packet access scheme setting unit 1068 sets the E-DCH scheme or the DCH scheme that has been selected by the packet access scheme selection unit 1066.

According to the embodiment, a code division multiple access (CDMA) wireless communication system, in which the DCH scheme and the E-DCH scheme are concurrently utilized as the uplink packet access schemes, can be provided. In the wireless communication system, it is possible to determine, for a mobile station communicating in the DCH scheme and for a mobile station that initiates a communication, whether a call (which is to be transmitted) is transmitted by the DCH scheme or the E-DCH scheme. When the uplink throughput that is expected for a case where a communication is performed in the E-DCH scheme is greater than or equal to a predetermined threshold value for throughput, the E-DCH scheme is selected. When the uplink throughput is less than the threshold value, the DCH scheme is selected. Since the E-DCH scheme is not selected when the throughput is less than the threshold value, it is not possible that the throughput becomes lower than that of the DCH scheme, though the E-DCH scheme has been selected.

In the wireless communication system, a process of determining, for the mobile station communicating in the DCH scheme and for the mobile station that initiates the communication, whether the call (which is to be transmitted) is transmitted by the DCH scheme or the E-DCH scheme may be periodically performed.

<Modified example (version 1)>

In the above-described embodiment, the example has been shown such that the radio network controller 100 performs the process of selecting the uplink packet access scheme. However, the process of selecting the uplink packet access scheme may be performed by the radio base station 200.

<Wireless communication system>

The wireless communication system is the same as that of explained while referring to FIG. 1.

<Radio base station>

The radio base station 200 accommodates the E-DCH communication candidate cells, and determines, for the mobile station communicating in the DCH scheme and for the mobile station that initiates a communication, whether a call (which is to be transmitted) is to be transmitted by the DCH scheme or the E-DCH scheme. In other words, in the radio base station 200, two packet access schemes, which are the DCH scheme and the E-DCH scheme, are concurrently utilized.

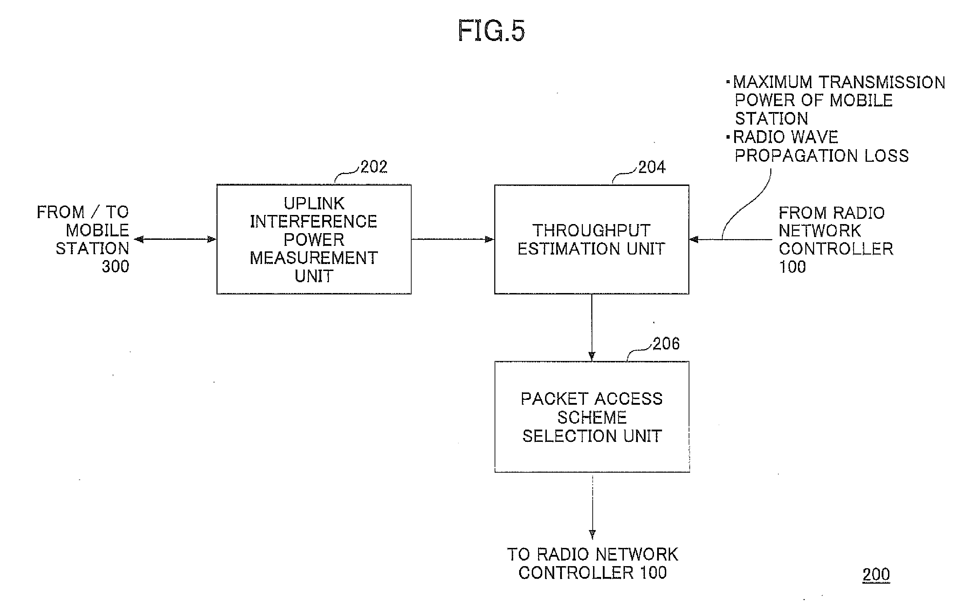

FIG. 5 shows functions of the radio base station 200. In FIG. 5, portions related to the embodiment are mainly explained. Therefore, it should be noted that the wireless base station device 200 includes blocks that are required for realizing the functions as the radio base station, but that are not shown in the figure or whose explanations are omitted. The blocks whose explanations are omitted include, for example, a power supply unit.

The radio base station 200 includes an uplink interference power measurement unit 202. The uplink interference power measurement unit 202 measures total received power of spread spectrum signals by receiving calls that are transmitted by the DCH scheme or the E-DCH scheme from the sector that is covered by the radio base station 200. The total received power may be measured for each cell. Further, the total received power may be periodically measured. The uplink interference power measurement unit 202 inputs the uplink interference power to a throughput estimation unit 204.

The radio base station 200 includes a throughput estimation unit 204. The throughput estimation unit 204 is connected to the uplink interference power measurement unit 202. The radio network controller 100 inputs the radio wave propagation loss and the maximum transmission power of the mobile stations (the uplink packet access scheme selection target mobile stations) to the uplink interference power measurement unit 202. Further, uplink interference power that has been measured by another radio base station may be input. The uplink interference power may be transmitted from the other radio base station to the radio network controller, and may be transmitted from the radio network controller to the radio base station. The throughput estimation unit 204 estimates the maximum uplink Ec/NO, based on the uplink interference power, the radio wave propagation loss, and the maximum transmission power of the mobile stations. For example, the throughput estimation unit 1064 calculates the "estimated maximum uplink Ec/NO [dB]" by the above-described formula (1).

The throughput estimation unit 204 estimates the uplink throughput, based on the estimated maximum uplink Ec/NO [dB]. For example, the throughput estimation unit 204 may include a correspondence table that associates the maximum uplink Ec/NO [dB] with the uplink throughput. When the throughput estimation unit 204 estimates the maximum uplink Ec/NO [dB], the throughput estimation unit 204 obtains the uplink throughput corresponding to the maximum uplink Ec/NO [dB]. The correspondence table may be derived in advance, based on actual measurement values. For example, it can be derived based on a value obtained by averaging the actual measurement values. The throughput estimation unit 204 inputs the estimated value of the uplink throughput to a packet access scheme selection unit 206.

The radio base station 200 includes the packet access scheme selection unit 206. The packet access scheme selection unit 206 is connected to the throughput estimation unit 204. The packet access scheme selection unit 206 selects a packet access scheme, based on the estimated value of the uplink throughput, which has been input by the throughput estimation unit 204. For example, when the estimated value of the uplink throughput is greater than or equal to a predetermined threshold value, the packet access scheme selection unit 206 selects the E-DCH scheme. Further, when the estimated value of the uplink throughput is less than the predetermined threshold value, the packet access scheme selection unit 206 selects the DCH scheme. The packet access scheme selection unit 206 transmits the selected packet access scheme to the radio network controller 100.

<Radio network controller>

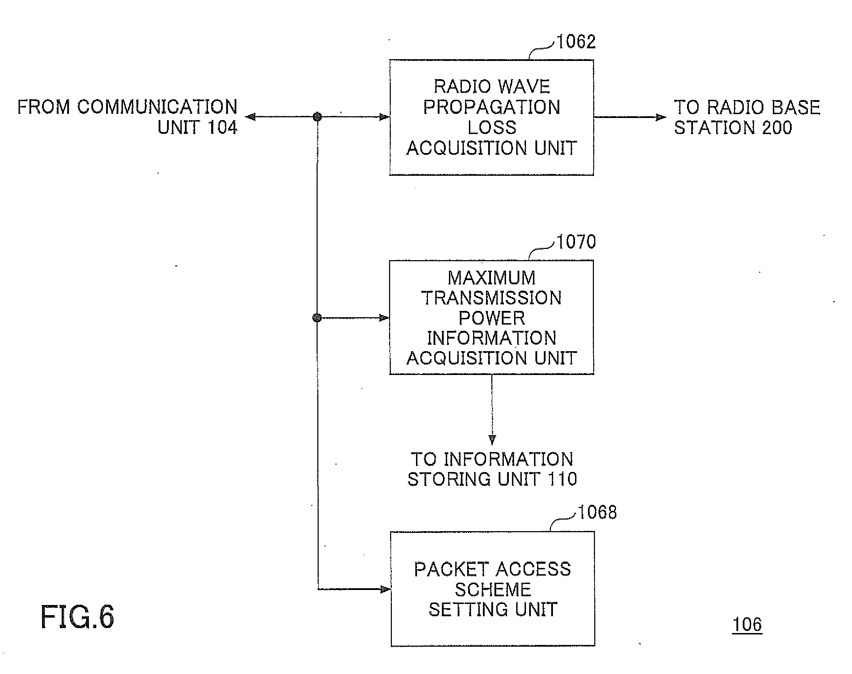

FIG. 6 shows functions of the control unit 106 of the radio network controller 100. In FIG. 6, portions related to the embodiment are mainly explained. Therefore, it should be noted that the radio network controller 100 includes blocks that are required for realizing functions as the radio network controller, but that are not shown in the figure or whose explanations are omitted. The blocks whose explanations are omitted include, for example, a power supply unit.

The radio network controller 100 includes, in the control unit 106 that has been explained while referring to FIG. 3, the radio wave propagation loss acquisition unit 1062, the packet access scheme setting unit 1068, and the maximum transmission power information acquisition unit 1070.

The radio wave propagation loss acquisition unit 1062 is connected to the communication unit 104. The radio wave propagation loss acquisition unit 1062 obtains the radio wave propagation loss that has been measured by the mobile station 300. The radio wave propagation loss is obtained by way of the radio base station 200. The radio wave propagation loss is transmitted to the radio base station 200.

The packet access scheme setting unit 1068 is connected to the communication unit 104. The packet access scheme setting unit 1068 sets the packet access scheme that has been transmitted from the radio base station 200. For example, when the E-DCH scheme is selected for the mobile station 300 communicating in the DCH scheme, the E-DCH is set to the mobile station 300. Further, for example, when the DCH scheme is selected for the mobile station 300 communicating in the DCH scheme, the packet access scheme that has been set to the mobile station 300 remains unchanged. That is because it has already been set. For example, when the E-DCH scheme is selected for the mobile station 300 that initiates a communication, the E-DCH is set to the mobile station 300. Further, for example, when the DCH scheme is selected for the mobile station 300 that initiates a communication, the DCH is set to the mobile station 300.

The packet access scheme setting unit 1068, to mobile station 300, transmits an uplink packet access scheme setting signal to the mobile station 300. With the uplink packet access scheme setting signal, it is possible to report to the mobile station communicating in the DCH scheme whether a transmission is to be performed by the DCH or a transmission is to be performed by the E-DCH. Further, with the uplink packet access scheme setting signal, it is possible to report to the mobile station 300 that initiates a communication whether a transmission is to be performed by the DCH or a transmission is to be performed by the E-DCH. The uplink packet access scheme setting signal is transmitted to the mobile station 300 through the radio base station 200.

The maximum transmission power information acquisition unit 1070 is connected to the communication unit 104. The maximum transmission power information acquisition unit 1070 obtains information regarding the maximum transmission power that can be transmitted from the uplink packet access scheme selection target mobile station, which is located in a serving E-DCH scheme communication candidate cell. The maximum transmission power acquisition unit 1070 stores the information regarding the maximum transmission power in the information storing unit 110.

<Uplink packet access scheme selection method>

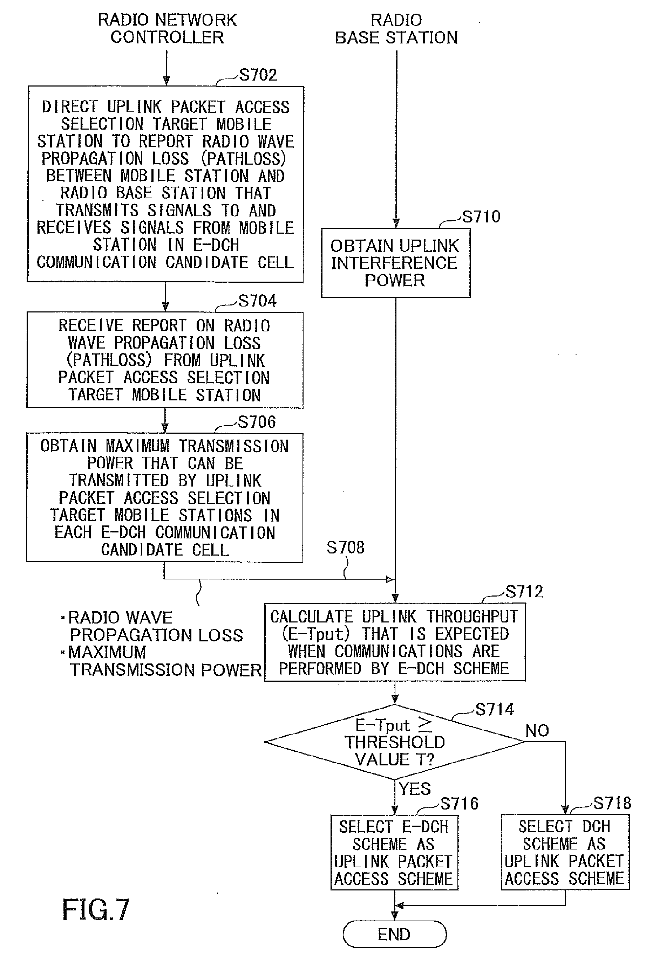

FIG. 7 shows an uplink packet access scheme selection method according to the modified example. In the modified example, the wireless base station device 200 selects whether the DCH scheme is to be utilized or the E-DCH scheme is to be utilized as the uplink packet access scheme for a call to be transmitted by the mobile station communicating in the DCH scheme and/or the mobile station that initiates a communication.

Steps S702 through S706 are the same as steps S402 through S406 shown in FIG. 4. After the process of step S706 has been terminated, the radio network controller 100 reports the radio wave propagation loss and the maximum transmission power to the radio base station 200 (step S708).

The radio base station 200 obtains uplink interference power for each E-DCH communication candidate cell (step S710). For example, the uplink interference power acquisition unit 202 obtains the uplink interference power based on uplink signals transmitted from mobile stations located in the serving sector, which is to be covered by the radio base station 200. The processes of steps S708 and S710 may be reversed.

The radio base station 200 estimates, for each cell that conforms to the E-DCH scheme, the throughput of the uplink, which is expected in a case where the uplink packet access scheme selection target mobile station performs a communication by the E-DCH scheme. For example, the uplink interference power acquisition unit 202 inputs the uplink interference power to the throughput estimation unit 204, and the radio network controller 100 reports the radio wave propagation loss and the information regarding the maximum transmission power to the throughput estimation unit 204. The throughput estimation unit 204 estimates the uplink throughput (E-Tput), based on the input information. The uplink throughput is input to the packet access scheme selection unit 206.

The radio base station 200 determines whether there exists a cell where the uplink throughput (E-Tput) estimated at step S712 is greater than or equal to the threshold value T, among the E-DCH communication candidate cells. For example, the packet access scheme selection unit 206 determines whether there exists a cell for which the uplink throughput (E-Tput) input from the throughput estimation unit 204 is greater than or equal to the threshold value T, among the E-DCH communication candidate cells.

When there exists a cell where the uplink throughput (E-Tput) is greater than or equal to the threshold value T (step S714: YES), the radio base station 200 selects the E-DCH scheme as the uplink access scheme (step S716). For example, when there exists a cell where the uplink throughput is greater than or equal to the threshold value T, the packet access scheme selection unit 206 selects the E-DCH scheme as the uplink access scheme for the uplink packet access scheme selection target mobile station, which is located in the serving cell.

On the other hand, when there are no cells where the uplink throughput is greater than or equal to the threshold value T (step S714: NO), the radio base station 200 selects the DCH scheme as the uplink access scheme (step S718). For example, when there are no cells where the uplink throughput is greater than or equal to the threshold value T, the packet access scheme selection unit 206 selects the DCH scheme as the uplink access scheme for the uplink packet access scheme selection target mobile station, which is located in the serving cell.

After the E-DCH scheme or the DCH scheme has been selected as the uplink access scheme, the radio base station 200 reports the selected uplink access scheme to the radio network controller 100. The radio network controller 100 sets the uplink wireless access scheme that has been reported by the radio base station 200. For example, the packet access scheme setting unit 1068 sets the E-DCH scheme or the DCH scheme that has been selected by the packet access scheme selection unit 1066.

<Modified example (version 2)>

In the above-described embodiment, the example has been shown where the uplink packet access scheme is selected by the radio network controller 100. However, the selection may be performed by the switching center apparatus 20.

<Wireless communication system>

The wireless communication system is the same as that of explained while referring to FIG. 1.

<Switching center apparatus>

The switching center apparatus 20 determines, for the mobile station communicating in the DCH scheme and for the mobile station that initiates a communication, whether a call (which is to be transmitted) is to be transmitted by the DCH scheme or the E-DCH scheme.

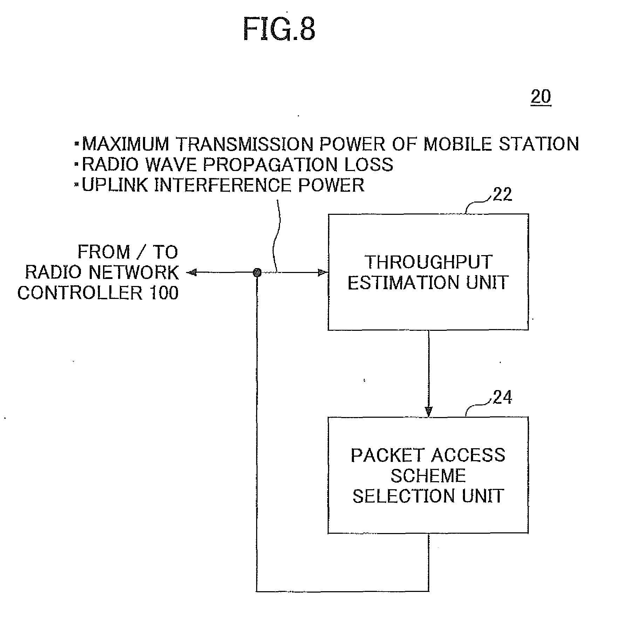

FIG. 8 shows functions of the switching center apparatus 20. In FIG. 8, portions related to the embodiment are mainly explained. Therefore, it should be noted that the switching center apparatus 20 includes blocks that are required for realizing the functions as a switching center apparatus, but that are not shown in the figure or whose explanations are omitted. The blocks whose explanations are omitted include, for example, a power supply unit.

The switching center apparatus 20 includes a throughput estimation unit 22. The radio network controller 100 inputs the maximum transmission power of mobile stations, the radio wave propagation loss, and the uplink interference power to the uplink interference power measurement unit 22. The throughput estimation unit 22 estimates the maximum uplink Ec/NO based on the uplink interference power, the radio wave propagation loss, and the maximum transmission power of the mobile stations. For example, the throughput estimation unit 22 calculates the "estimated maximum uplink Ec/NO [dB]" by the above-described formula (1).

The throughput estimation unit 22 estimates the uplink throughput based on the estimated maximum uplink Ec/NO [dB]. For example, the throughput estimation unit 22 may include a correspondence table in which the maximum uplink Ec/NO [dB] and the uplink throughput are associated. When the throughput estimation unit 22 estimates the maximum uplink Ec/NO [dB], the throughput estimation unit 22 obtains the uplink throughput corresponding to the maximum uplink Ec/NO [dB]. The correspondence table may be derived in advance, based on actual measurement values. For example, it may be derived in advance, based on a value obtained by averaging the actual measurement values. The throughput estimation unit 22 inputs the estimated value of the uplink throughput to a packet access scheme determination unit 24.

The radio base station 200 includes the packet access scheme selection unit 24. The packet access scheme selection unit 24 is connected to the throughput estimation unit 22. The packet access scheme selection unit 24 selects a packet access scheme based on the estimated value of the uplink throughput that is input from the throughput estimation unit 22. For example, when the estimated value of the uplink throughput is greater than or equal to a predetermined threshold value, the packet access scheme selection unit 24 selects the E-DCH. Further, when the estimated value of the uplink throughput is less than the predetermined threshold value, the packet access scheme selection unit 24 selects the DCH. When the DCH is selected, the uplink access scheme is not changed. The selected packet access scheme is transmitted to the radio network controller 100.

<Radio network controller>

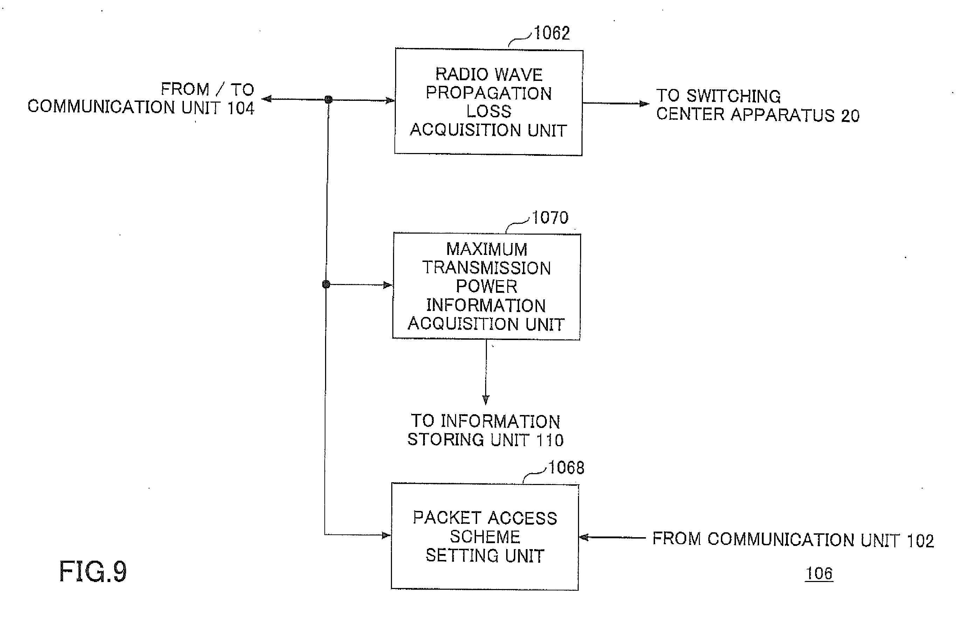

FIG. 9 shows functions of the control unit 106 of the radio network controller 100. In FIG. 9, portions related to the embodiment are mainly explained. Therefore, it should be noted that the radio network controller 100 includes blocks that are required for realizing functions as a radio network controller, but that are not shown in the figure or whose explanations are omitted. The blocks whose explanations are omitted include, for example, a power supply unit.

The radio network controller 100 includes, in the control unit 106 that has been explained while referring to FIG. 3, the radio wave propagation loss acquisition unit 1062, the packet access scheme setting unit 1068, and the maximum transmission power information acquisition unit 1070.

The radio wave propagation loss acquisition unit 1062 is connected to the communication unit 104. The radio wave propagation loss acquisition unit 1062 obtains the radio wave propagation loss measured by the mobile stations 300. The radio wave propagation loss is obtained by way of the radio base station 200. The radio wave propagation loss is transmitted to the switching center apparatus 20.

The packet access scheme setting unit 1068 sets the packet access scheme that has been transmitted from the switching center apparatus 20. For example, when the E-DCH scheme is selected for the mobile station 300 communicating in the DCH scheme, the E-DCH is set to the mobile station 300. Further, for example, when the DCH scheme is selected for the mobile station 300 communicating in the DCH scheme, the uplink packet access scheme that has been set to the mobile station 300 is not changed. That is because it has already been set. For example, when the E-DCH scheme is selected for the mobile station 300 that initiates a communication, the E-DCH is set to the mobile station 300. Further, for example, when the DCH scheme is selected for the mobile station 300 that initiates a communication, the DCH is set to the mobile station 300.

The packet access scheme setting unit 1068, to the mobile station 300, transmits an uplink packet access scheme setting signal to the mobile station 300. With the uplink packet access scheme setting signal, it is possible to report to the mobile station 300 communicating in the DCH scheme whether a transmission is to be performed by the DCH or a transmission is to be performed by the E-DCH. Further, with the uplink packet access scheme setting signal, it is possible to report to the mobile station 300 that initiates a communication whether a transmission is to be performed by the DCH or a transmission is to be performed by the E-DCH. The uplink packet access scheme setting signal is transmitted to the mobile station 300 through the radio base station 200.

The maximum transmission power information acquisition unit 1070 is connected to the communication unit 104. The maximum transmission power information acquisition unit 1070 obtains, from the uplink packet access scheme setting target mobile station that is located in the serving E-DCH scheme communication candidate cell, information regarding the maximum transmission power that can be transmitted by the mobile station. The maximum transmission power acquisition unit 1070 stores the information regarding the maximum transmission power in the information storing unit 110.

<Uplink packet access scheme selection method>

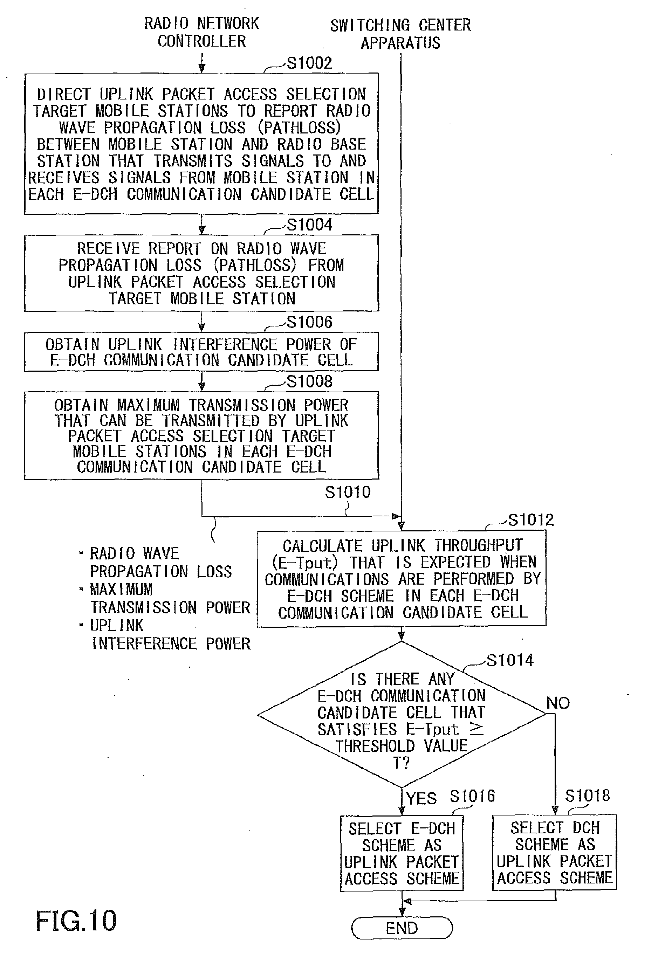

FIG. 10 shows an uplink packet access scheme selection method according to the modified example. In the modified example, the switching center apparatus 20 selects whether the DCH scheme is to be utilized or the E-DCH scheme is to be utilized as the uplink packet access scheme for a call to be transmitted (the uplink packet access scheme selection target call) by the mobile station communicating in the DCH scheme and/or the mobile station that initiates a communication.

Steps S1002 through S1008 are the same as steps S402 through S408 shown in FIG. 4. After the process of step S1008 has been terminated, the radio network controller 100 reports the radio wave propagation loss, the maximum transmission power, and the uplink interference power to the radio base station 200 (step S1010).

The switching center apparatus 200 estimates the throughput of the uplink that is expected when the uplink packet access scheme selection target mobile stations perform communications by the E-DCH scheme in each cell that conforms to the E-DCH scheme (step S1012). For example, the radio network controller 100 reports the uplink interference power, the radio wave propagation loss, and the information regarding the maximum transmission power to the throughput estimation unit 22. The throughput estimation unit 22 estimates the uplink throughput (E-Tput) based on the input information. The uplink throughput is input to the packet access scheme selection unit 24.

The switching center apparatus 200 determines whether there exists a cell where the uplink throughput (E-Tput) estimated at step S1012 is greater than or equal to the threshold value T, among the E-DCH communication candidate cells. For example, the packet access scheme selection unit 24 determines whether there exists a cell for which the uplink throughput (E-Tput) input from the throughput estimation unit 22 is greater than or equal to the threshold value T, among the E-DCH communication candidate cells.

When there exists a cell where the uplink throughput (E-Tput) is greater than or equal to the threshold value T (step S1014: YES), the switching center apparatus 200 selects the E-DCH scheme as the uplink access scheme (step S1016). For example, when there exists a cell where the uplink throughput is greater than or equal to the threshold value T, the packet access scheme selection unit 24 selects the E-DCH scheme as the uplink access scheme for the uplink packet access scheme selection target mobile station, which is located in the serving cell.

On the other hand, when there are no cells where the uplink throughput is greater than or equal to the threshold value T (step S1014: NO), the switching center apparatus 200 selects the DCH scheme as the uplink access scheme (step S1018). For example, when there are no cells where the uplink throughput is greater than or equal to the threshold value T, the packet access scheme selection unit 24 selects the DCH scheme as the uplink access scheme for the packet access scheme selection target mobile station, which is located in the serving cell.

After the E-DCH scheme or the DCH scheme has been selected as the uplink access scheme, the switching center apparatus 200 reports the selected uplink access scheme to the radio network controller 100. The radio network controller 100 sets the uplink wireless access scheme reported from the radio base station 200. For example, the packet access scheme setting unit 1068 sets the E-DCH scheme or the DCH scheme, which has been selected by the packet access scheme selection unit 1066.

With respect to embodiments including the above embodiments, the following items are disclosed.

(1) A radio network controller for a wireless communication system, in which a dedicated channel and an enhanced dedicated channel are switched and assigned for an uplink for each call, includes

a throughput estimation unit that estimates a throughput, wherein the throughput is expected when the enhanced dedicated channel is assigned to a call to be transmitted by a mobile station to which the dedicated channel has been assigned and/or to a call to be transmitted by a mobile station that initiates a communication; a packet access scheme selection unit that selects the enhanced dedicated channel, when the throughput estimated by the throughput estimation unit is greater than or equal to a predetermined threshold value; and a packet access scheme setting unit that sets the enhanced dedicated channel, when the packet access scheme selection unit selects the enhanced dedicated channel.

(2) In the radio network controller described in (1),

the packet access scheme selection unit selects the dedicated channel, when the throughput that has been estimated by the throughput estimation unit is less than or equal to the predetermined threshold value.

(3) In the radio network controller described in (1) or (2), the radio network controller includes

an uplink interference power acquisition unit that obtains uplink interference power in a candidate cell, the candidate cell being a candidate for performing a communication by the enhanced dedicated channel scheme; a maximum transmission power information acquisition unit that obtains the maximum transmission power that can be transmitted in the candidate cell by the mobile station to which the dedicated channel has been assigned and/or the mobile station that initiates the communication; and a propagation loss acquisition unit that obtains a radio wave propagation loss between the mobile station to which the dedicated channel has been assigned and/or the mobile station that initiates the communication and a radio base station that covers the candidate cell.

The throughput estimation unit estimates the throughput of the uplink based on the uplink interference power, the maximum transmission power, and the radio wave propagation loss.

(4) A wireless communication method for a radio network controller in a wireless communication system, in which a dedicated channel and an enhanced dedicated channel are switched and set for an uplink for each call, includes

a throughput estimation step of estimating a throughput, wherein the throughput is expected when the enhanced dedicated channel is assigned to a call to be transmitted by a mobile station to which the dedicated channel has been assigned and/or to a call to be transmitted by a mobile station that initiates a communication;

a packet access scheme selection step that selects the enhanced dedicated channel, when the throughput estimated by the throughput estimation step is greater than or equal to a predetermined threshold value, and that selects the dedicated channel, when the throughput estimated by the throughput estimation step is less than the predetermined threshold value; and

a packet access scheme setting step of setting the enhanced dedicated channel, when the packet access scheme selection step selects the enhanced dedicated channel.

(5) In the wireless communication method described in (4), the wireless communication method includes

an uplink interference power acquisition step of obtaining uplink interference power in a candidate cell, the candidate cell being a candidate for performing a communication by the enhanced dedicated channel scheme;

a maximum transmission power information acquisition step of obtaining the maximum transmission power that can be transmitted in the candidate cell by the mobile station to which the dedicated channel has been assigned and/or the mobile station that initiates the communication; and

a propagation loss acquisition step of obtaining a radio wave propagation loss between the mobile station to which the dedicated channel has been assigned and/or the mobile station that initiates the communication and a radio base station that covers the candidate cell.

The throughput estimation step estimates the throughput of the uplink based on the uplink interference power, the maximum transmission power, and the radio wave propagation loss.

For convenience of the explanations, specific numerals have been used in the description in order to facilitate understanding of the present invention. However, these numerals are simply illustrative, and any other appropriate values may be used, except indicated otherwise.

Although the present invention has been described with reference to specific embodiments, these embodiments are simply illustrative, and various variations, modifications, alterations, substitutions and so on could be conceived by those skilled in the art. For convenience of the explanations, devices according to the embodiments of the present invention have been described by using functional block diagrams, but the devices may be implemented in hardware, software or combinations thereof. The present invention is not limited to the above-described embodiments, and various variations, modifications, alterations, substitutions and so on are included, without departing from the spirit of the present invention.

This international patent application is based on Japanese Priority Application No. 2010-027766 filed on February 10, 2010, the entire contents of which are hereby incorporated by reference.

LIST OF REFERENCE SYMBOLS

1: Wireless communication system
10: Core network
20: Switching center apparatus
22: Throughput estimation unit
24: Packet access scheme selection unit
$100_1, \dots, 100_j$ (j is an integer such that j>0) Radio network controller
102: Communication unit
104: Communication unit
106: Control unit
1062: Radio wave propagation loss acquisition unit
1064: Throughput estimation unit
1066: Packet access scheme selection unit
1068: Packet access scheme setting unit
1070: Maximum transmission power information acquisition unit
108: Uplink interference power information acquisition unit
110: Information storing unit
$200_1, \dots, 200_k$ (k is an integer such that k>0) Radio base station
202: Uplink interference power measurement unit

204: Throughput estimation unit
206: Packet access scheme selection unit
$300_1$, ..., $300_m$ (m is an integer such that m>0) Mobile station
$400_1$, ..., $400_k$ (k is an integer such that k>0) Sector

**Claims**

1.  A radio network controller for a wireless communication system in which a dedicated channel and an enhanced dedicated channel are switched and assigned for an uplink for each call, the radio network controller comprising:

    a throughput estimation unit that estimates a throughput, wherein the throughput is expected when the enhanced dedicated channel is assigned to a call to be transmitted by a mobile station to which the dedicated channel has been assigned and/or to a call to be transmitted by a mobile station that initiates a communication;
    a packet access scheme selection unit that selects the enhanced dedicated channel, when the throughput estimated by the throughput estimation unit is greater than or equal to a predetermined threshold value; and
    a packet access scheme setting unit that sets the enhanced dedicated channel, when the packet access scheme selection unit selects the enhanced dedicated channel.

2.  The radio network controller according to claim 1,
    wherein the packet access scheme selection unit selects the dedicated channel, when the throughput that has been estimated by the throughput estimation unit is less than the predetermined threshold value.

3.  The radio network controller according to claim 1 or 2,
    wherein the radio network controller further includes
    an uplink interference power acquisition unit that obtains uplink interference power in a candidate cell, the candidate cell being a candidate for performing a communication by an enhanced dedicated channel scheme;
    a maximum transmission power information acquisition unit that obtains the maximum transmission power that can be transmitted in the candidate cell by the mobile station to which the dedicated channel has been assigned and/or the mobile station that initiates the communication; and
    a propagation loss acquisition unit that obtains a radio wave propagation loss between the mobile station to which the dedicated channel has been assigned and/or the mobile station that initiates the communication and a radio base station that covers the candidate cell,
    wherein the throughput estimation unit estimates the throughput of the uplink based on the uplink interference power, the maximum transmission power, and the radio wave propagation loss.

4.  A wireless communication method for a radio network controller in a wireless communication system in which a dedicated channel and an enhanced dedicated channel are switched and assigned for an uplink for each call, the wireless communication method comprising:

    a throughput estimation step of estimating a throughput, wherein the throughput is expected when the enhanced dedicated channel is assigned to a call to be transmitted by a mobile station to which the dedicated channel has been assigned and/or a call to be transmitted by a mobile station that initiates a communication;
    a packet access scheme selection step that selects the enhanced dedicated channel, when the throughput estimated by the throughput estimation step is greater than or equal to a predetermined threshold value, and that selects the dedicated channel, when the throughput estimated by the throughput estimation step is less than the predetermined threshold value; and
    a packet access scheme setting step of setting the enhanced dedicated channel, when the packet access scheme selection step selects the enhanced dedicated channel.

5.  The wireless communication method according to claim 4, further comprising:

    an uplink interference power acquisition step of obtaining uplink interference power in a candidate cell, the candidate cell being a candidate for performing a communication by the enhanced dedicated channel scheme;
    a maximum transmission power information acquisition step of obtaining the maximum transmission power that can be transmitted in the candidate cell by the mobile station to which the dedicated channel has been assigned and/or the mobile station that initiates the communication; and
    a propagation loss acquisition step of obtaining a radio wave propagation loss between the mobile station to which the dedicated channel has been assigned and/or the mobile station that initiates the communication and a radio base station that covers the candidate cell,
wherein the throughput estimation step estimates the throughput of the uplink based on the uplink interference power, the maximum transmission power, and the radio wave propagation loss.

# FIG.1

# FIG.2

EP 2 536 237 A1

# FIG.3

FROM UPLINK INTERFERENCE POWER
INFORMATION ACQUISITION UNIT 108 →

MAXIMUM
TRANSMISSION POWER
OF MOBILE STATION

⌐1064

THROUGHPUT
ESTIMATION
UNIT

FROM INFORMATION
STORING UNIT 110

⌐1062

RADIO WAVE
PROPAGATION
LOSS
ACQUISITION UNIT

FROM / TO
COMMUNICATION
UNIT 104

⌐1066

PACKET ACCESS
SCHEME
SELECTION UNIT

⌐1070

MAXIMUM
TRANSMISSION
POWER
INFORMATION
ACQUISITION UNIT

TO INFORMATION
STORING UNIT 110

⌐1068

PACKET ACCESS
SCHEME
SETTING UNIT

106

FIG.4

START

DIRECT UPLINK PACKET ACCESS SELECTION TARGET MOBILE STATION TO REPORT RADIO WAVE PROPAGATION LOSS (PATHLOSS) BETWEEN MOBILE STATION AND RADIO BASE STATION THAT TRANSMITS SIGNALS TO AND RECEIVES SIGNALS FROM MOBILE STATION IN E-DCH COMMUNICATION CANDIDATE CELL   ~S402

RECEIVE REPORT ON RADIO WAVE PROPAGATION LOSS (PATHLOSS) FROM UPLINK PACKET ACCESS SELECTION TARGET MOBILE STATION   ~S404

OBTAIN UPLINK INTERFERENCE POWER OF EACH E-DCH COMMUNICATION CANDIDATE CELL   ~S406

OBTAIN MAXIMUM TRANSMISSION POWER THAT CAN BE TRANSMITTED BY UPLINK PACKET ACCESS SELECTION TARGET MOBILE STATIONS IN EACH E-DCH COMMUNICATION CANDIDATE CELL   ~S408

CALCULATE UPLINK THROUGHPUT (E-Tput) THAT IS EXPECTED WHEN COMMUNICATIONS ARE PERFORMED BY E-DCH SCHEME IN EACH E-DCH COMMUNICATION CANDIDATE CELL   ~S410

IS THERE ANY E-DCH COMMUNICATION CANDIDATE CELL THAT SATISFIES E-Tput ≥ THRESHOLD VALUE T ?   S412

NO

YES   S414

SELECT E-DCH SCHEME AS UPLINK PACKET ACCESS SCHEME

S416

SELECT DCH SCHEME AS UPLINK PACKET ACCESS SCHEME

END

# FIG.5

FROM / TO MOBILE STATION 300

UPLINK INTERFERENCE POWER MEASUREMENT UNIT `202`

THROUGHPUT ESTIMATION UNIT `204`

·MAXIMUM TRANSMISSION POWER OF MOBILE STATION
·RADIO WAVE PROPAGATION LOSS

FROM RADIO NETWORK CONTROLLER 100

PACKET ACCESS SCHEME SELECTION UNIT `206`

TO RADIO NETWORK CONTROLLER 100

200

EP 2 536 237 A1

FIG.6

FROM COMMUNICATION UNIT 104 →

_1062

RADIO WAVE
PROPAGATION
LOSS
ACQUISITION UNIT

→ TO RADIO BASE STATION 200

_1070

MAXIMUM
TRANSMISSION
POWER
INFORMATION
ACQUISITION UNIT

TO INFORMATION
STORING UNIT 110

_1068

PACKET ACCESS
SCHEME
SETTING UNIT

106

EP 2 536 237 A1

RADIO NETWORK
CONTROLLER

RADIO
BASE STATION

S702

DIRECT UPLINK PACKET ACCESS
SELECTION TARGET MOBILE
STATION TO REPORT RADIO WAVE
PROPAGATION LOSS (PATHLOSS)
BETWEEN MOBILE STATION AND
RADIO BASE STATION THAT
TRANSMITS SIGNALS TO AND
RECEIVES SIGNALS FROM MOBILE
STATION IN E-DCH
COMMUNICATION CANDIDATE CELL

S710

OBTAIN UPLINK
INTERFERENCE
POWER

S704

RECEIVE REPORT ON RADIO
WAVE PROPAGATION LOSS
(PATHLOSS) FROM UPLINK
PACKET ACCESS SELECTION
TARGET MOBILE STATION

S706

OBTAIN MAXIMUM TRANSMISSION
POWER THAT CAN BE
TRANSMITTED BY UPLINK
PACKET ACCESS SELECTION
TARGET MOBILE STATIONS IN
EACH E-DCH COMMUNICATION
CANDIDATE CELL

S708

・RADIO WAVE
PROPAGATION LOSS
・MAXIMUM
TRANSMISSION POWER

S712

CALCULATE UPLINK THROUGHPUT
(E-Tput) THAT IS EXPECTED
WHEN COMMUNICATIONS ARE
PERFORMED BY E-DCH SCHEME

S714

E-Tput ≥
THRESHOLD
VALUE T?

NO

YES

S716

SELECT E-DCH
SCHEME AS
UPLINK PACKET
ACCESS SCHEME

S718

SELECT DCH
SCHEME AS
UPLINK PACKET
ACCESS SCHEME

FIG.7

END

# FIG.8

<u>20</u>

•MAXIMUM TRANSMISSION POWER OF MOBILE STATION
•RADIO WAVE PROPAGATION LOSS
•UPLINK INTERFERENCE POWER

FROM / TO
RADIO NETWORK
CONTROLLER 100

THROUGHPUT
ESTIMATION UNIT
~22

PACKET ACCESS
SCHEME
SELECTION UNIT
~24

EP 2 536 237 A1

FIG.9

FROM / TO
COMMUNICATION UNIT 104

1062

RADIO WAVE
PROPAGATION
LOSS
ACQUISITION UNIT

TO SWITCHING
CENTER APPARATUS 20

1070

MAXIMUM
TRANSMISSION
POWER
INFORMATION
ACQUISITION UNIT

TO INFORMATION
STORING UNIT 110

1068

PACKET ACCESS
SCHEME
SETTING UNIT

FROM COMMUNICATION UNIT 102

106

RADIO NETWORK CONTROLLER

SWITCHING CENTER APPARATUS

**S1002**

DIRECT UPLINK PACKET ACCESS SELECTION TARGET MOBILE STATIONS TO REPORT RADIO WAVE PROPAGATION LOSS (PATHLOSS) BETWEEN MOBILE STATION AND RADIO BASE STATION THAT TRANSMITS SIGNALS TO AND RECEIVES SIGNALS FROM MOBILE STATION IN EACH E-DCH COMMUNICATION CANDIDATE CELL

**S1004**

RECEIVE REPORT ON RADIO WAVE PROPAGATION LOSS (PATHLOSS) FROM UPLINK PACKET ACCESS SELECTION TARGET MOBILE STATION

**S1006**

OBTAIN UPLINK INTERFERENCE POWER OF E-DCH COMMUNICATION CANDIDATE CELL

**S1008**

OBTAIN MAXIMUM TRANSMISSION POWER THAT CAN BE TRANSMITTED BY UPLINK PACKET ACCESS SELECTION TARGET MOBILE STATIONS IN EACH E-DCH COMMUNICATION CANDIDATE CELL

**S1010**

- RADIO WAVE PROPAGATION LOSS
- MAXIMUM TRANSMISSION POWER
- UPLINK INTERFERENCE POWER

**S1012**

CALCULATE UPLINK THROUGHPUT (E-Tput) THAT IS EXPECTED WHEN COMMUNICATIONS ARE PERFORMED BY E-DCH SCHEME IN EACH E-DCH COMMUNICATION CANDIDATE CELL

**S1014**

IS THERE ANY E-DCH COMMUNICATION CANDIDATE CELL THAT SATISFIES E-Tput $\geq$ THRESHOLD VALUE T?

NO

YES **S1016**

SELECT E-DCH SCHEME AS UPLINK PACKET ACCESS SCHEME

**S1018**

SELECT DCH SCHEME AS UPLINK PACKET ACCESS SCHEME

END

**FIG.10**

<div style="text-align:center"><b>INTERNATIONAL SEARCH REPORT</b></div>

| | International application No. |
|---|---|
| | PCT/JP2011/052605 |

**A. CLASSIFICATION OF SUBJECT MATTER**
*H04W72/08(2009.01)i*

According to International Patent Classification (IPC) or to both national classification and IPC

**B. FIELDS SEARCHED**

Minimum documentation searched (classification system followed by classification symbols)
H04B7/24-7/26, H04W4/00-99/00

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-518958 A (Telefonaktiebolaget LM Ericsson (publ)), 25 June 2002 (25.06.2002), paragraphs [0005], [0006], [0036]; fig. 5 & US 6594238 B1 & US 6347091 B1 & EP 1088463 A & WO 1999/066748 A1 & CN 1345518 A | 1-5 |
| Y | WO 2006/114873 A1 (Mitsubishi Electric Corp.), 02 November 2006 (02.11.2006), paragraph [0023]; fig. 2 & US 2008/0253300 A1 & EP 1873925 A1 & CN 101180804 A | 1-5 |

☒ Further documents are listed in the continuation of Box C.    ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 22 March, 2011 (22.03.11) | Date of mailing of the international search report 29 March, 2011 (29.03.11) |
|---|---|
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/052605

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2007-104037 A  (Mitsubishi Electric Corp.), 19 April 2007 (19.04.2007), paragraph [0023] (Family: none) | 1-5 |
| Y | WO 2009/058072 A1  (TELEFONAKTIEBOLAGET L M ERICSSON (PUBL)), 07 May 2009 (07.05.2009), paragraph [0042] & US 2009/0110087 A1    & EP 2204028 A | 3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010027766 A

**Non-patent literature cited in the description**

- *3GPP TS21.101 V8.2.2,* December 2009
- *3GPP TS25.308 V9.1.0,* September 2009
- *3GPP TS25.309 V6.6.0,* March 2006